# EUROPEAN PATENT SPECIFICATION

(11) **EP 3 461 653 B1**
(45) Date of publication and mention of the grant of the patent: **03.06.2020**
(21) Application number: 18197649.9
(22) Date of filing: 28.09.2018
(51) Int. Cl.: B60B 35/00, B60G 9/00, B60G 11/113, B60B 35/04, B60B 35/08

(54) **AXLE CLAMPING ARRANGEMENT**
ACHSENKLEMMANORDNUNG
AGENCEMENT DE FIXATION D'ESSIEU

(30) Priority: 28.09.2017 NL 2019637
(43) Date of publication of application: 03.04.2019
(73) Proprietor: VDL Weweler B.V., 7325 WC Apeldoorn (NL)
(72) Inventor: AALDERINK, Derk Geert, 7245 NV LAREN (NL); BRUINJA, Marten Frank Ciarán, 7545 VV ENSCHEDE (NL); SCHRIER, Tom, 7323 TE APELDOORN (NL)
(74) Representative: EP&C

(56) References cited:
- EP-A1- 2 844 499
- EP-A1- 3 013 601
- EP-A2- 3 210 804

## Description

The present invention relates to a vehicle axle clamping arrangement according to the preamble of claim 1.

Such an axle clamping arrangement is known from EP 2844499. In this known axle clamping arrangement the trailing arm has an arch shaped axle seat portion which initially, in an unloaded state, spans a smaller angle (α1) of an arc. Upon tensioning of the tensioning means the known axle seat portion deforms such that it is folded over the circumference of the axle body to a final state in which the axle seat portion spans a larger angle (α2), thus α1<α2. The known axle clamping arrangement is based on the idea that by tightening the tensioning means during assembly of the axle clamping arrangement, the axle seat portion of the trailing arm is subjected to a significant deformation to tightly fit on the outer circumference of the axle body to be clamped. The purpose of this deformation is that the part of the circumference of the axle body engaged by the axle seat of the trailing arm is increased such that the axle seat portion of the trailing arm and the clamping element retain the axle body by non-positive locking (in EP 2844499 called "kraftschlüssig" or "force-fitting manner"). In the end state the so called "fixing regions" ("Befestigungsbereich") of the trailing arm and of the clamp element, i.e. the regions of the trailing arm and the clamping element which are engaged by the "fixing element" ("Befestigungselement") are forced against each other.

EP 2844499 further describes that the ends of the axle seating portion can be provided with a recess and the clamping element can be provided with a corresponding protrusion which engages in the recess in a positively locking manner (in EP 2844499 called "formschlussig" or "form-fitting manner"). Preferably the protrusions and the corresponding recesses have a wedge shape such that upon tightening of the tensioning means the protrusions are forced radially inwards, whereby the protrusion applies a locally high surface pressure on the axle body and non-positively locks ("kraftschlüssig sichern") the axle body against movement (e.g. rotation) relative to the trailing arm and the clamping element.

A trailing arm with an integral axle seating portion that must be deformable to fit it on the axle body has the disadvantage that in practise it does not have the mechanical strength to withstand dynamic loads that are applied on it during normal use of the vehicle. In particular the trailing arm will be subjected to dynamical loads due to for example roll movements of the vehicle. The axle clamping arrangement needs to have sufficient rigidity (stiffness) to withstand these loads and avoid the risk of loosening of the clamping arrangement. The deformable axle seat portion of the trailing arm of EP 2844499 cannot provide such rigidity in practise.

The present invention has for an object to provide another axle clamping arrangement, wherein loosening of the clamping arrangement can be prevented or at least mitigated to a great extent.

This object is achieved by a vehicle axle clamping arrangement according to claim 1.

According to the invention the arch shaped axle seat portion of the trailing arm is rigid and the clamping element is a rigid body, which has the effect that upon tightening of the tensioning means these parts suffer no or just an immaterial deformation. Furthermore the trailing arm has at the axle seating portion in front of the axle body a first abutment surface and the clamping element has an opposite second abutment surface, wherein the first abutment surface and second abutment surface are tightened into deadlock by a front tensioning means. This has the effect that the front end of the clamping arrangement is rigidly fixed. The rear end of the clamping element has a rear protrusion and the axle seating portion of the trailing arm has a groove-like recess extending in the tangential direction of the axle seat portion. The rear protrusion is received in the groove-like recess, wherein the rear protrusion and the groove-like recess are formed such that, upon tightening or releasing of a rear tensioning means, the rear protrusion can slide freely further into or out of the groove. In other words the groove-like recess provides a blockage-free sliding channel for the rear protrusion. There is no interlocking between the protrusion and the groove-like recess in the tangential direction of the groove-like recess, whereby the rear protrusion is not hindered in its movement in the tangential direction. The rear end of the axle seat portion and the rear end of the clamping element do not abut and are not forced against each other like the front end, but are only engaging through the rear protrusion and the groove-like recess. This has the effect that upon tightening of the rear tightening means the protrusion will move further into the groove whereby tolerances in the axle body, the axle seat portion or the clamping element can be compensated. This is thus different from the structure known from EP 2844499 in which the rear fixing regions of the axle seat portion and the clamping element are forced against each other by the associated tensioning element.

The rear protrusion and the corresponding recess provide an interlocking between the clamping element and the axle seat portion in the transverse direction of the trailing arm.

Furthermore the rear protrusion and the corresponding recess also provide an interlocking in the radial direction. Thereby the clamping element cannot disengage from the axle body, whereby fatigue of the axle body is counteracted.

In a preferred embodiment of the clamping arrangement according to the invention the front end of the clamping element has a front protrusion and the axle seat portion of the trailing arm has a groove-like recess extending in the longitudinal direction of the trailing arm and in which the front protrusion is received, wherein the front protrusion and the groove-like recess are formed such that there is no interlocking between the rear protrusion and the recess in the longitudinal direction. The front protrusion and the corresponding recess provide an interlocking between the clamping element and the axle seat portion in the transverse direction of the trailing arm.

In a further practical embodiment the rear protrusion has an outer side with a radius of curvature with respect to an axis parallel to or coinciding with the centre axis of the axle body, and the associated recess has an inner side that faces the outer side of the protrusion and which has a corresponding radius of curvature. The rear protrusion is thus able to slide relative to the recess when the axle clamping arrangement is assembled and tightened such that a radial force component on the protrusion is avoided.

In a further preferred embodiment the axle seat portion has a groove formed in its concave side, said groove extending in the tangential direction from the front to the rear end of the axle seat portion, wherein said groove-like recess at the front and the groove-like recess at the rear of the axle seating portion are the front end portion and rear end portion of said groove.

In another preferred embodiment the engagement side of the clamping element is provided with a protrusion and the axle body is provided with a complementary recess receiving the protrusion to achieve an interlocking between the axle body and the clamping element. This protrusion and recess provide a positive interlocking between the axle body and the clamping element which prevents movement of the axle body with respect to the clamping element, in particular also rotation of the axle body relative to the clamping element.

The tensioning means may comprise a front and a rear tensioning means. In a preferred embodiment the tensioning means comprise a front and a rear U-bolt which extend with their bend portion respectively around a front formation and a rear formation on the clamping element. The second abutment surface is preferably formed on a side of the front formation opposite where the bend portion of the U-bolt extends around the front formation.

The invention will be further elucidated in the following detailed description with reference to the drawings, in which:
Fig. 1 shows in a side elevational view a wheel axle suspension with an embodiment of an axle clamping arrangement according to the invention,
Fig. 2 shows a view in perspective of the axle clamping arrangement shown in Fig. 1,
Fig. 3 shows a view in perspective from below of a trailing arm of the wheel axle suspension of Fig. 1,
Fig. 4 shows a view in perspective of a clamping element of the clamping arrangement of Fig. 1,
Fig. 5 shows a longitudinal cross section of the trailing arm of Fig. 3,
Fig. 6 shows a longitudinal cross section of the trailing arm of Fig. 3 with an axle body placed against its axle seat portion,
Fig. 7 shows a longitudinal cross section of the trailing arm and axle body of Fig. 6, wherein the clamping element of Fig. 4 arranged on an opposite side of the axle body,
Fig. 8 shows the assembly of Fig. 7 in a side elevational view,
Fig. 9 shows in a cross section the assembly of Fig. 7 with a front tensioning element,
Fig. 10 shows the assembly of Fig. 9 with a rear tensioning element,
Fig. 11 shows a view in perspective of an alternative embodiment of a clamping element of the clamping arrangement according to the invention, and
Fig. 12 shows another view in perspective of the clamping element of Fig. 11.

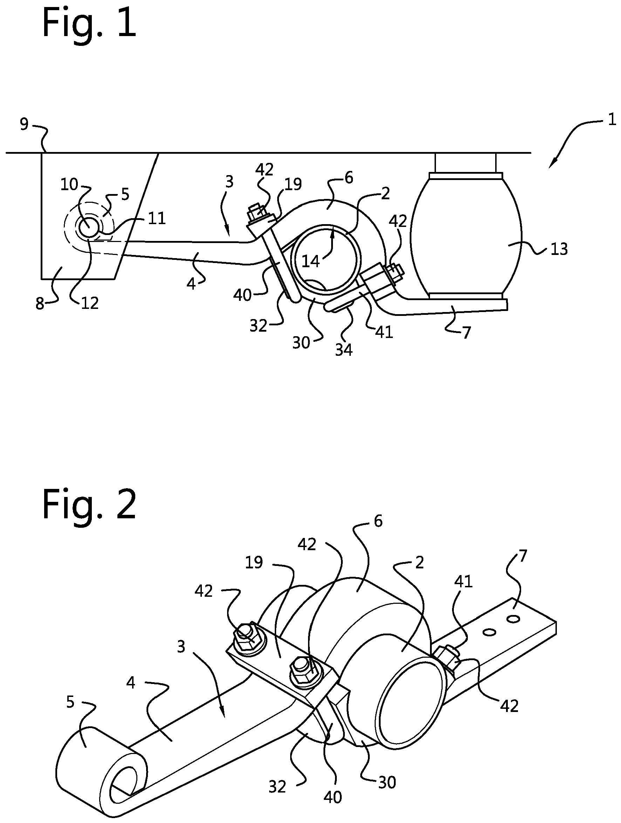

In Fig. 1 a schematic side view of an air sprung wheel axle suspension 1 is shown. Such a wheel axle suspension 1 comprises an axle body 2 of a vehicle wheel axle. The axle body 2 is in general a tubular steel part that extends in a transverse direction of the vehicle. At the lateral ends of the axle body 2 wheels and other components such as brakes can be mounted. In the shown embodiment the axle body 2 has a circular cross section.

The axle body 2 is attached to two trailing arms 3 which extend substantially in a longitudinal direction of the vehicle. The trailing arms 3 are in the transverse direction spaced apart. In the Figs 1 and 2 only one trailing arm is shown. The trailing arm 3 shown in this embodiment is a flexible trailing arm made of spring steel. The flexible trailing arm 3 has a spring portion 4. At a front end of the spring portion 4 an eyelet 5 is formed. At a rear end of the spring portion 4 an axle seat portion 6 adjoins the spring portion 4. Rearward of the axle seat portion 6 the trailing arm has an air spring mounting portion 7.

The spring portion 4 has a thickness taper, wherein the spring portion 4 has the smallest thickness at a front end portion and increases in thickness towards the rear. The thickness is greatest where the spring portion 4 adjoins the axle seat portion 6. In general the thickness taper will have a parabolic profile. Therefore this type of trailing arms is often referred to in the relevant technical field as parabolic spring arms, or parabolic arms. The arm 3 can be made by rolling and/or forging and other forming processes well known to a person skilled in the art in order to give the trailing arm 3 the desired shape and mechanical properties.

The trailing arm 3 is pivotally attached to a carrying bracket 8 which is attached to a vehicle chassis 9. A pivot bolt 10 extends through the eyelet 5 and engages the carrying bracket 8 in a way well known in the art, such that a pivotal structure is created. In the eyelet 5 the pivot bolt 10 is surrounded by a so called silent block known in the art, which is a metal bushing 11 with on the outside a rubber encasing 12 that engages the inner side of the eyelet 5.

At the rear end portion of the trailing arm 3 an air spring 13 is attached to the air spring mounting portion 7. The air spring 13 is at an upper end operationally connected to the vehicle chassis 9.

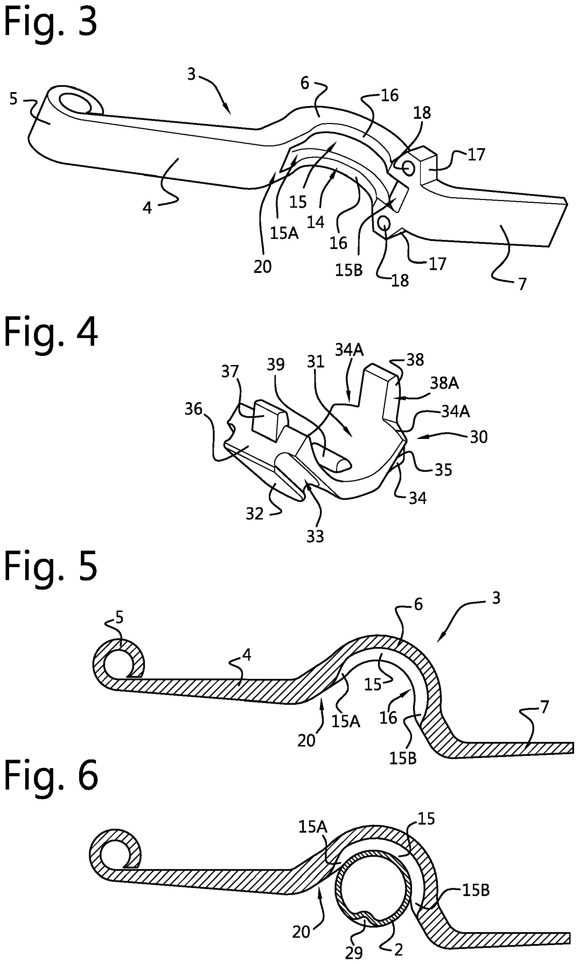

The axle seat portion 6 is an arch shaped portion of the trailing arm 3. The arch shape of the axle seat portion 6 is such that a clamping section of the axle body 2 can rest against a concave side 14 (cf. Fig. 3) thereof. The clamping section of the axle body 2 is thus a longitudinal section of the axle body 2 that is clamped against the concave side 14 of the axle seat portion 6.

Opposite the axle seat portion 6 a clamping element 30 is arranged against the clamping section of the axle body 2. The clamping element 30 is tightened towards the axle body 2 by means of tensioning elements 40, 41 such that the axle seat portion 6 of the trailing arm 3, the axle body 2 and the clamping element 30 are clamped together and a rigid connection results. This clamped assembly of axle body 2, trailing arm 3, clamping element 30 and tensioning elements 40, 41 is what will be referred to as the clamping arrangement.

The assembly of the axle body 2 and the trailing arms 3, which are attached to the vehicle chassis as is described above, acts inter alia as a roll stabilizing structure, which absorbs loads induced by roll movements of the vehicle, e.g. when the vehicle drives around a corner. Also loads due to braking of the vehicle wheels, and road conditions are absorbed. The trailing arm 3 is flexible in the sense that it is designed to bend at the spring portion 4 so as to absorb said loads. The trailing arms 3 and the axle body 2 are rigidly attached to each other by a clamping structure. It is important that the clamping arrangement does not loosen due to the loads that it is subjected to during use of the vehicle.

Details of the clamping arrangement will come forward in the further description below.

In Fig. 3 the trailing arm 3 is visible. The axle seat portion 6 is rigid. The concave side 14 of the axle seat portion 6 has a longitudinal channel or groove 15 which is situated in the centre, seen in transverse direction of the trailing arm 3. The groove 15 extends from a front end to a rear end of the axle seat portion 6. The groove 15 is flanked by two axle engagement surfaces 16, which in the assembled state engage the axle body 2. At the rear end of the axle seat portion 6, ears 17 are formed at the lateral side of the axle seat portion 6, which ears 17 extend outwardly in lateral direction. A bore 18 is formed in each of the ears 17 for passing through a shank of a tensioning element.

In Fig. 4 the clamping element 30, complementary to the trailing arm 3, is visible. The clamping element 30 is a rigid part and made of metal formed by for example casting or forging. In the specific embodiment of Fig. 4, the clamping element 30 comprises a generally arch shaped body with a concave side 31 which in the assembled state of the clamping arrangement faces the concave side 14 of the axle seat portion 6 of the trailing arm 3 and surrounds and engages a part of the circumference of the clamping section of the axle body 2.

On a front side of the clamping element 30 a front formation 32 is formed, which has an outer channel 33 formed in it adapted to receive a front U-bolt 40 which extends around the front formation as is visible in Fig. 2. In a similar way a rear formation 34 is formed at a rear side of the clamping element 30, which rear formation 34 has a channel 35 formed in it adapted to receive a rear U-bolt 41 which extends around the rear formation as is visible in Fig. 1. The front and rear tensioning elements 40, 41 in this embodiment are thus formed by the mentioned front U-bolt 40 and rear U-bolt 41.

It must be appreciated that also other tensioning means are envisaged to be used in a clamping arrangement according to the invention. For example straight bolts with a head and a threaded end can be used. In any case the clamping part can be adapted to engage and cooperate with the specific type of bolts or other tensioning means as will be understood by a skilled person.

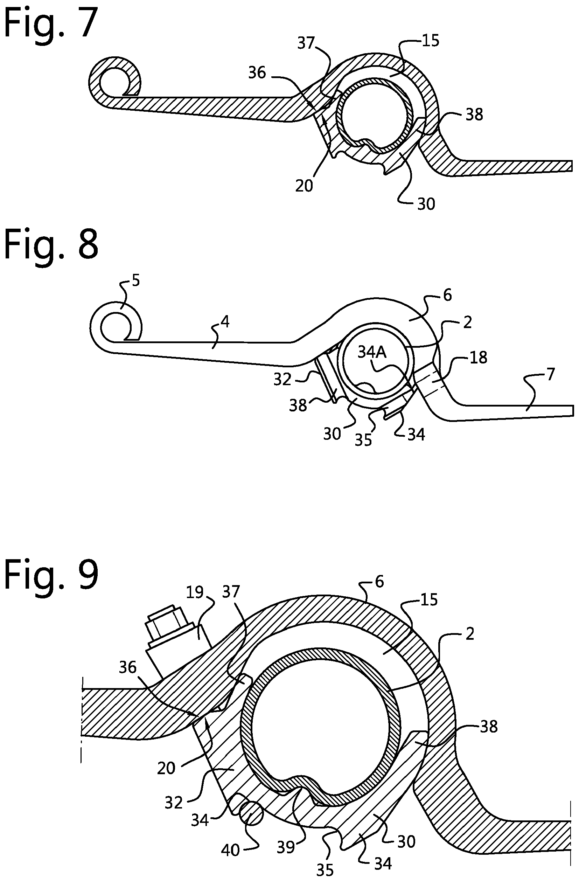

The clamping element 30 has an abutment surface 36 (cf. Fig. 4) adapted to abut with an abutment surface 20 of the axle seat portion 6. In this specific embodiment the abutment surface is arranged at the top of the front formation as can be seen in Figs. 7 - 10.

Furthermore, the clamping element 30 has at a front edge of the concave side 31 a protrusion 37 adapted to fit in a front portion 15A of the groove 15.

The clamping element 30 has at a rear edge of the concave side 31 a rear protrusion 38 which is adapted to fit in a rear portion 15B of the groove 15.

The clamping element 30 has on the concave side a locking protrusion 39, in this specific embodiment an elongate protrusion extending with its longitudinal axis in the transverse direction of the vehicle. In other embodiments the locking protrusion may have another shape, e.g. spherical or another elongate shape as is shown here. The axle body 2 is provided with a corresponding locking recess 29 (cf. Fig. 6), in this particular case an elongate recess extending in a longitudinal direction of the axle body 2. The locking recess 29 is preferably formed by pressing an indentation in the axle body 2. The locking protrusion 39 and the recess 29 provide a positioning feature to position the axle body 2 and the trailing arm 3 mutually correct. Furthermore, the protrusion 39 and the recess 29 interlock the axle body 2 and the clamping element 30 in the tangential direction of the axle body 2, so as to prevent relative rotation of the axle body 2 with respect to the axle seat portion 6 of the trailing arm 3.

In the assembled state the shanks of the rear U-bolt 41 extend through the bores 18 in the ears 17 of the axle seat portion. The shanks of the front U-bolt 40 extend along the lateral side of the trailing arm 3 and extend through a strap plate 19 (cf. Fig. 2). The U-bolts 40, 41 can be tensioned by tightening nuts 42.

The clamping arrangement is assembled as follows with reference to the Figs 5-10:

A trailing arm 3 is provided as is shown in Fig. 5. The trailing arm 3 is positioned with its engagement surfaces 16 of the axle seat portion 6 on the clamping section of the axle body 2 as is shown in Fig. 6.

The clamping element 30 is placed on the opposite side of the clamping section of the axle body 2 as is shown in Figs 7 and 8. The locking protrusion 39 is inserted in the locking recess 29 in the axle body 2. The front protrusion 37 is inserted in a front portion 15A of the groove 15 as can be seen in Fig. 7. The rear protrusion 38 is inserted in the rear end portion 15B of the groove 15 (see Fig. 7), which forms an obstacle-free channel for the rear protrusion 38.

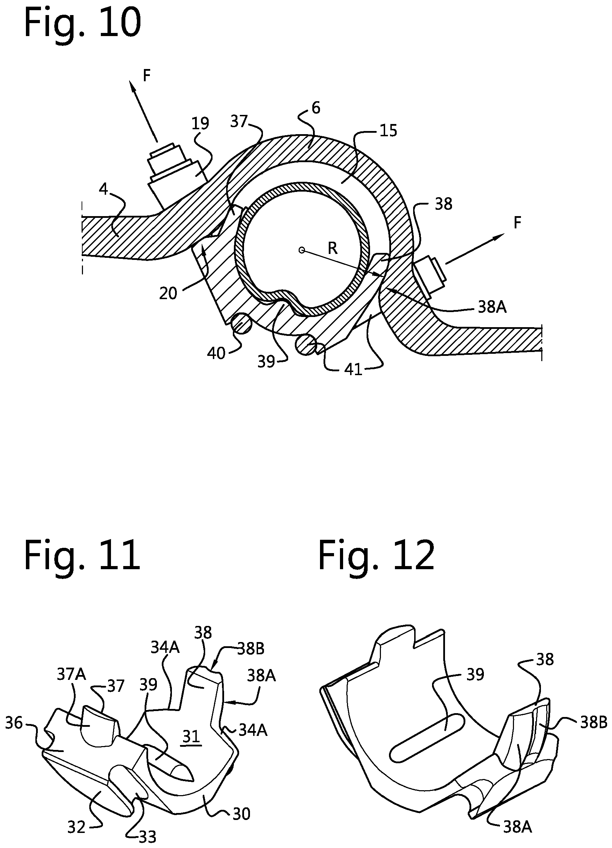

The rear protrusion 38 has an outer side 38A and the associated recess, i.e. the rear end portion 15B of the groove 15 has an inner side that faces the outer side 38A of the protrusion 38 and which has a complementary shape such that the outer side 38A and the inner side of the rear end portion 15B of the groove can move in tangential direction along each other. In a practical example the outer side 38B and the inner side of the rear end portion 15B of the groove 15 may have a complementary radius of curvature R as is indicated in Fig. 10. Although the radius R is indicated in Fig. 10 with respect to the centre line of the axle body, the radius may also be defined with respect to another axis, for example an axis that extends parallel at the centre line of the axle body but at the interface between the engagement surfaces 20 and 36 at the front end of the axle seat portion 6.

The front U-bolt 40 is arranged around the front formation 32 with its shanks extending inclined forwardly and upwardly along and beyond the lateral sides of the trailing arm 3. The strap plate 19 is arranged on the side of the trailing arm 3 facing away from the axle body 2. The shanks of the U-bolt 40 extend through bores in the strap plate 19. Nuts 42 are screwed onto the threaded end portions of the shanks of the U-bolt 40 and tightened. By tightening the front U-bolt 40 the abutment surface 36 at the front of the clamping element 30 is clamped into deadlock with the abutment surface 20 of the trailing arm 3. This situation is depicted in Fig. 9.
The rear U-bolt 41 is arranged around the rear formation 34 of the clamping element 30. The threaded ends of the shanks of the U-bolt are passed through the bores 18 and nuts 42 are screwed thereon. The nuts 42 on the rear U-bolt 41 are tightened after the nuts 42 on the front U-bolt 40 are tightened. Fig. 10 shows the situation in which all nuts 42 are tightened. By tightening the nuts 42 on the rear U-bolt 41 the clamping element 30 is clamped into tight engagement with the axle body 2. The rear protrusion 38 is able to slide further into the groove end 15B upon tightening of the nuts 42 on the rear U-bolt 41, because of the corresponding shapes of the outer surface 38A of the rear projection 38 and the inner surface of the rear end portion 15B of the groove 15. Thus tolerances in the axle body 2 and in the other parts can be compensated.

It is noted that the rear edge 34A of the clamping element 30, which flanks the rear protrusion 38 does not come into engagement with the trailing arm 3. At the rear end of the clamping element 30 only the rear protrusion 38 engages the trailing arm 3. In the tangential direction the rear protrusion 38 can slide in the groove 15. The movement of the protrusion 38 into the groove 15 is limited by the presence of the axle body 2 in the clamping arrangement. Moreover it is noted that the axle seat portion 6 is rigid and that the clamping element 30 is rigid in this structure. At most it will be the clamping section of the axle body 2 which will deform and conform to the shape of the axle seat portion 6 and the clamping element 30. This local deformation of the axle body 2 would then also serve to compensate for tolerances.

The rear protrusion 38 provides a positive locking in the transverse direction by engagement of the side faces of the protrusion 38 and of the rear end portion 15B of the groove 15. In the radial direction the

Figs 11 and 12 show an alternative embodiment of a clamping element and the same parts are designated with the same reference numerals as in the above description. The difference with the embodiment of the clamping element 30 in Fig. 4 is that the front protrusion 37 has a curved outer surface 37A, wherein the curve angle is around an axis which is perpendicular to the centre axis of the axle body 2. Another difference is that the rear protrusion has an outer side 38A, which includes two inclined surfaces 38A separated by a central tangential groove 38B. The groove 15 in the axle seat portion, or at least the front end portion 15A and the rear end portion 15B thereof are formed with a shape complementary with the outer shape of the respective protrusions 37 and 38 of Figs. 11 and 12. The two inclined surfaces 38A separated by the central groove 38B warrant that the rear protrusion will engage the inner surface of the rear portion 15B of the groove 15on both the surfaces 38A, and not in the centre region, which allows the rear protrusion 38 to absorb transversal forces.

It is noted that in another possible embodiment the recess 29 in the axle body 2 and the corresponding protrusion 39 on the concave side 31 of the clamping element 30 may be omitted. In such an embodiment the axle body 2 and the clamping element 30 can be interconnected by welding, which is well known in the art.

## Claims

1. Vehicle axle clamping arrangement for a (air) sprung wheel axle of a vehicle, in particular of a utility vehicle such as a truck, trailer or semi-trailer, the axle clamping arrangement comprising:
- an axle body (2) extending in a transverse direction of the vehicle, the axle body (2) having a round cross-section;
- a trailing arm (3) crossing the axle body (2), the trailing arm (3) having an arch shaped axle seat portion (6) with a concave side (14) against which a clamping section of the axle body (2) is seated;
- a clamping element (30) arranged opposite the axle seat portion (6) of the trailing arm (3) and having an arch shaped engagement side (31) to engage a circumferential portion of the clamping section of the axle body (2);
- tensioning means (40, 41, 42) for clamping said axle seat portion (6) of the trailing arm (3), said clamping element (30) and said clamping section of the axle body (2) together;
- the trailing arm (3) has at the axle seat portion (6) in front of the axle body (2) a first abutment surface (20) and the clamping element (30) has an opposite second abutment surface (36);
**characterized in that**
- the arch shaped axle seat portion (6) of the trailing arm (3) is rigid and the clamping element (30) is a rigid body;
- the first abutment surface (20) and second abutment surface (36) are tightened into deadlock by the tensioning means (40, 42);
- the rear end of the clamping element (30) has a rear protrusion (38) and the axle seat portion (6) of the trailing arm (3) has a groove-like recess (15B) extending in a tangential direction of the axle seat portion (6) and in which the rear protrusion (38) is received, wherein the rear protrusion (38) and the groove-like recess (15B) are formed such that, upon tightening or releasing of the tensioning means (41, 42), the rear protrusion (38) can slide freely further into or out of the recess (15B) in the tangential direction of the recess (15B).

2. Vehicle axle clamping arrangement according to claim 1, wherein the engagement side (31) of the clamping element (30) is provided with a protrusion (39) and the axle body (2) is provided with a complementary recess (29) receiving the protrusion (39) to achieve an interlocking between the axle body (2) and the clamping element (30).

3. Vehicle axle clamping arrangement according to any of the preceding claims, wherein the rear protrusion (38) has an outer side (38A) with a radius of curvature (R) with respect to an axis parallel to or coinciding with the centre axis of the axle body (2) and the associated recess (15B) has an inner side that faces the outer side (38A) of the protrusion (38) and which has a corresponding radius of curvature (R).

4. Vehicle axle clamping arrangement according to any of the preceding claims, wherein the front end of the clamping element (30) has a front protrusion (37) and the axle seat portion (6) of the trailing arm (3) has a groove-like recess (15A) extending in the longitudinal direction of the trailing arm (3) and in which the front protrusion (37) is received, wherein the front protrusion (37) and the groove-like recess (15A) are formed such that there is no interlocking between the front protrusion (37) and the recess (15A) in the longitudinal direction.

5. Vehicle axle clamping arrangement according to any of the preceding claims, wherein the axle seat portion (6) has a groove (15) formed in its concave side, said groove (15) extending in the tangential direction of the axle seat portion (6) from the front to the rear end of the axle seat portion (6), wherein said groove-like recess (15A) at the front and the groove-like recess at (15B) the rear of the axle seating portion (6) are the front end portion (15A) and rear end portion (15B) of said groove (15).

## Patentansprüche

1. Fahrzeugachswellenklemmanordnung für eine (luft-)gefederte Radachswelle eines Fahrzeugs, insbesondere eines Nutzfahrzeugs wie etwa eines Lastwagens, eines Anhängers oder eines Aufliegers, wobei die Achswellenklemmanordnung umfasst:
- einen Achswellenkörper (2), der sich in einer Querrichtung des Fahrzeugs erstreckt, wobei der Achswellenkörper (2) einen runden Querschnitt aufweist;
- einen Längslenker (3), der den Achswellenkörper (2) kreuzt, wobei der Längslenker (3) einen bogenförmigen Achswellensitzabschnitt (6) mit einer konkaven Seite (14) aufweist, gegen die ein Klemmabschnitt des Achswellenkörpers (2) anliegt;
- ein Klemmelement (30), das gegenüber dem Achswellensitzabschnitt (6) des Längslenkers (3) angeordnet ist und eine bogenförmige Eingriffsseite (31) zum Eingriff mit einem Umfangsabschnitt des Klemmabschnitts des Achswellenkörpers (2) aufweist;
- Spannmittel (40, 41, 42) zum Zusammenklemmen des Achswellensitzabschnitts (6) des Längslenkers (3), des Klemmelements (30) und des Klemmabschnitts des Achswellenkörpers (2);
- der Längslenker (3) weist am Achswellensitzabschnitt (6) vor dem Achswellenkörper (2) eine erste Anlagefläche (20) auf und das Klemmelement (30) weist eine gegenüberliegende zweite Anlagefläche (36) auf;
**dadurch gekennzeichnet, dass**
- der bogenförmige Achswellensitzabschnitt (6) des Längslenkers (3) starr ist, und das Klemmelement (30) ein starrer Körper ist;
- die erste Anlagefläche (20) und die zweite Anlagefläche (36) durch das Spannmittel (40, 42) in Verklemmung angezogen sind;
- das hintere Ende des Klemmelements (30) einen hinteren Vorsprung (38) aufweist, und der Achswellensitzabschnitt (6) des Längslenkers (3) eine nutförmige Ausnehmung (15B) aufweist, die sich in einer Tangentialrichtung des Achswellensitzabschnitts (6) erstreckt und in der der hintere Vorsprung (38) aufgenommen ist, wobei der hintere Vorsprung (38) und die nutförmige Ausnehmung (15B) derart ausgebildet sind, dass sich beim Anziehen oder Lösen des Spannelements (41, 42) der hintere Vorsprung (38) frei weiter in die oder aus der Ausnehmung (15B) in der Tangentialrichtung der Ausnehmung (15B) verschieben kann.

2. Fahrzeugachswellenklemmanordnung nach Anspruch 1, wobei die Eingriffsseite (31) des Klemmelements (30) mit einem Vorsprung (39) versehen ist und der Achswellenkörper (2) mit einer komplementären Ausnehmung (29) versehen ist, die den Vorsprung (39) aufnimmt, um eine Verriegelung zwischen dem Achswellenkörper (2) und dem Klemmelement (30) zu erreichen.

3. Fahrzeugachswellenklemmanordnung nach einem der vorangegangenen Ansprüche, wobei der hintere Vorsprung (38) eine Außenseite (38A) mit einem Krümmungsradius (R) bezüglich einer Achse hat, die parallel zu der oder zusammenfallend mit der Mittelachse des Achswellenkörpers (2) ist und die dazugehörige Ausnehmung (15B) eine Innenseite aufweist, die der Außenseite (38A) des Vorsprungs (38) zugewandt ist und die einen entsprechenden Krümmungsradius (R) aufweist.

4. Fahrzeugachswellenklemmanordnung nach einem der vorangegangenen Ansprüche, wobei das vordere Ende des Klemmelements (30) einen vorderen Vorsprung (37) aufweist und der Achswellensitzabschnitt (6) des Längslenkers (3) eine nutförmige Ausnehmung (15A) aufweist, die sich in der Längsrichtung des Längslenkers (3) erstreckt und in der der vordere Vorsprung (37) aufgenommen ist, wobei der vordere Vorsprung (37) und die nutförmige Ausnehmung (15A) derart ausgebildet sind, dass es keine Verriegelung zwischen dem vorderen Vorsprung (37) und der Ausnehmung (15A) in der Längsrichtung gibt.

5. Fahrzeugachswellenklemmanordnung nach einem der vorangegangenen Ansprüche, wobei der Achswellensitzabschnitt (6) eine Nut (15) aufweist, die in seiner konkaven Seite ausgebildet ist, wobei sich die Nut (15) in der Tangentialrichtung des Achswellensitzabschnitts (6) vom vorderen zum hinteren Ende des Achswellensitzabschnitts (6) erstreckt, wobei die nutförmige Ausnehmung (15A) an der Vorderseite und die nutförmige Ausnehmung (15B) an der Hinterseite des Achswellensitzabschnitts (6) der vordere Endabschnitt (15A) und der hintere Endabschnitt (15B) der Nut (15) sind.

## Revendications

1. Dispositif de serrage d'essieu de véhicule pour un essieu de roue à ressort (pneumatique) d'un véhicule, en particulier d'un véhicule utilitaire tel qu'un camion, une remorque ou un semi-remorque, le dispositif de serrage d'essieu comprenant:
- un corps d'essieu (2) s'étendant dans une direction transversale du véhicule, le corps d'essieu (2) ayant une section transversale ronde;
- un bras oscillant (3) croisant le corps d'essieu (2), le bras oscillant (3) ayant une partie de siège d'essieu (6) en forme d'arc avec un côté concave (14) contre lequel une section de serrage du corps d'essieu (2) est située;
- un élément de serrage (30) disposé en face de la partie de siège d'essieu (6) du bras oscillant (3) et ayant un côté d'engagement (31) en forme d'arc pour engager une partie circonférentielle de la section de serrage du corps d'essieu (2) ;
- des moyens de tension (40, 41, 42) pour serrer ensemble ladite partie de siège d'essieu (6) du bras oscillant (3), ledit élément de serrage (30) et ladite section de serrage du corps d'essieu (2);
- le bras oscillant (3) présente à la partie de siège d'essieu (6) devant le corps d'essieu (2) une première surface de butée (20) et l'élément de serrage (30) a une deuxième surface de butée opposée (36) ;
**caractérisé en ce que**
- la partie de siège d'essieu (6) en forme d'arc du bras oscillant (3) est rigide et l'élément de serrage (30) est un corps rigide;
- la première surface de butée (20) et la deuxième surface de butée (36) sont serrées jusqu'à un blocage par les moyens de tension (40, 42);
- l'extrémité arrière de l'élément de serrage (30) a une saillie arrière (38) et la partie de siège d'essieu (6) du bras oscillant (3) présente un évidement (15B) en forme de rainure s'étendant dans une direction tangentielle de la partie de siège d'essieu (6) et dans laquelle la saillie arrière (38) est reçue, dans lequel la saillie arrière (38) et l'évidement (15B) en forme de rainure sont formés de telle sorte que, lors du serrage ou du relâchement des moyens de tension (41, 42), la saillie arrière (38) peut coulisser librement davantage dans ou hors de l'évidement (15B) dans la direction tangentielle de l'évidement (15B).

2. Dispositif de serrage d'essieu de véhicule selon la revendication 1, dans lequel le côté d'engagement (31) de l'élément de serrage (30) est pourvu d'une saillie (39) et le corps d'essieu (2) est pourvu d'un évidement complémentaire (29) recevant la saillie (39) pour réaliser un verrouillage entre le corps d'essieu (2) et l'élément de serrage (30).

3. Dispositif de serrage d'essieu de véhicule selon l'une quelconque des revendications précédentes, dans lequel la saillie arrière (38) a un côté extérieur (38A) avec un rayon de courbure (R) par rapport à un axe parallèle à ou coïncidant avec l'axe central du corps d'essieu (2) et l'évidement (15B) associé a un côté intérieur qui fait face au côté extérieur (38A) de la saillie (38) et qui a un rayon de courbure correspondant (R).

4. Dispositif de serrage d'essieu de véhicule selon l'une quelconque des revendications précédentes, dans lequel l'extrémité avant de l'élément de serrage (30) a une saillie avant (37) et la partie de siège d'essieu (6) du bras oscillant (3) a un évidement (15A) en forme de rainure s'étendant dans la direction longitudinale du bras oscillant (3) et dans lequel la saillie avant (37) est reçue, dans lequel la saillie avant (37) et l'évidement (15A) en forme de rainure sont formés de telle sorte qu'il y a pas de verrouillage entre la saillie avant (37) et l'évidement (15A) dans la direction longitudinale.

5. Dispositif de serrage d'essieu de véhicule selon l'une quelconque des revendications précédentes, dans lequel la portion de siège d'essieu (6) a une rainure (15) formée dans son côté concave, ladite rainure (15) s'étendant dans la direction tangentielle de la partie de siège d'essieu (6) de l'extrémité avant à l'extrémité arrière de la partie de siège d'essieu (6), dans lequel ledit évidement (15A) en forme de rainure à l'avant et l'évidement (15B) en forme de rainure en à l'arrière de la partie de siège d'essieu (6) sont les parties d'extrémité avant (15A) et d'extrémité arrière (15B) de ladite rainure (15).
